# EUROPEAN PATENT APPLICATION

(11) **EP 2 881 285 A1**
(43) Date of publication of application: **10.06.2015**
(21) Application number: 13825503.9
(22) Date of filing: 26.07.2013
(51) Int. Cl.: B60Q 1/56, B60R 13/10

(54) **MULTIFUNCTIONAL PLATE HAVING VEHICLE LICENSE PLATE LIGHTING STRUCTURE**

(30) Priority: 01.08.2012 KR 20120084293
(71) Applicant: Sim, Dong-hyeon, Seoul 122-872 (KR)
(72) Inventor: Sim, Dong-hyeon, Seoul 122-872 (KR)
(74) Representative: Gulde & Partner
(86) International application number: PCT/KR2013/006716
(87) International publication number: WO 2014/021583

(57) **Abstract**

The present invention relates to a multifunctional plate for protecting a vehicle license plate, which can minimize deterioration of the outer appearance of the plate caused by a bolt or a seal that is protruded to the outside of a license plate in which specific information of a vehicle is recorded and minimize damage to another vehicle in the case of a collision, and which can provide a lighting structure for lighting the license plate such that a vehicle license number can be identified in dark conditions such as at night. To this end, the present invention provides a multifunctional plate (10) for protecting a license plate, comprising a protection frame (11) which is mounted on a front bumper or a rear side of a vehicle and is protruded from an edge at a suitable height such that a license plate having specific information of the vehicle can be mounted therein, wherein: a protection cover (20) is coupled to the plate (10) so as to prevent a head portion of a license plate-coupling bolt (1) or a seal (2), which is protruded from a surface of the license plate when the license plate mounted in the plate (10) is fixed to a car body, from coming in contact with another vehicle; and the plate (10) or the protection cover (20) is provided with a lighting means (L) for identifying a number through the direct light upon the license plate when lighted.

## Description

### TECHNICAL FIELD

The present invention relates to a vehicle license plate, and more particularly, a multifunctional plate for a vehicle license plate which provides a structure for effectively protecting and supporting a license plate having unique number of the vehicle and also provides a new lighting structure capable of lighting the license plate so that identification of the vehicle number can be allowed in a dark condition such as at night by applying high-efficiency LED(Light Emitting Diode) and thus capable of ensuring a diversity of the design of vehicle body.

### BACKGROUND ART

In general, it is prescribed that all types of vehicle necessarily have a license plate attached thereto on which an unique information such as owner, type and registration area etc. of the vehicle is recorded, and each country uses a vehicle license plate of predefined standard.

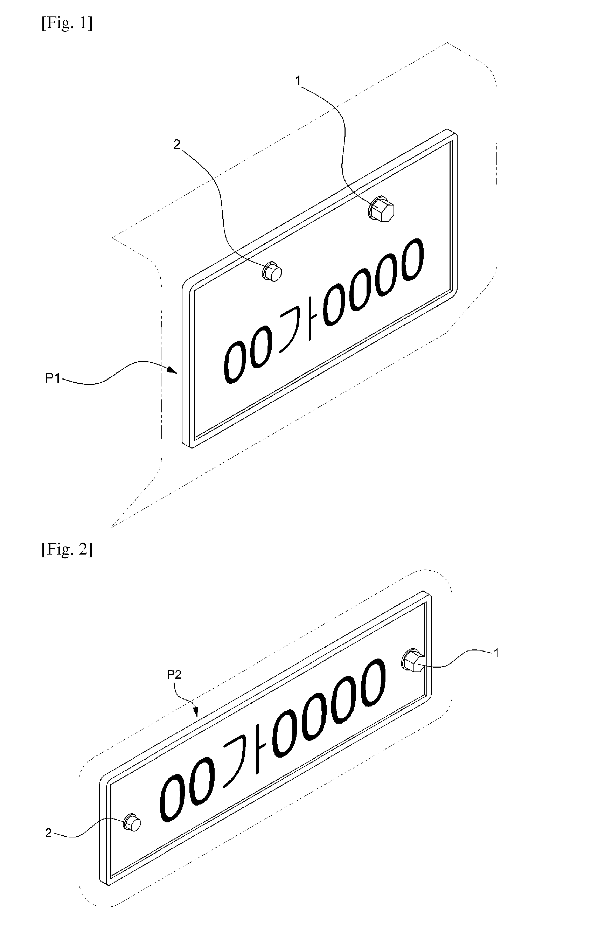

Figs.1 and 2 illustrate vehicle license plates of different standards, respectively. A license plate (P1) illustrated in Fig.1 is fixed by two bolts (1) arranged at a proper interval above an unique number, whereas a left bolt of the license plate attached to a rear surface of the vehicle is replaced with a seal (2). A license plate (P2) illustrated in Fig.2 is fixed by two bolts (1) arranged in margins on both sides of the unique number, respectively, whereas a left bolt of a rear license plate is replaced with the seal (2).

Most of such license plates are directly attached and fixed to front and rear bumpers of the vehicle or a vehicle body; furthermore, a protecting member for license plate (not illustrated) has been proposed where a separate protecting plate is added and coupled to the license plate for enhancing outer appearance while preventing damage to or deformation of the license plate.

However, most of prior protecting members for license plate are produced for the purpose of preventing damage to a edge portion of the license plate and also decorating the edge portion while supporting a rear surface of the license plates (P1, P2), and do not in the least take into consideration the bolts or seal for fixing the license plates (P1, P2) to the vehicle body.

There is just a method where the bolt protruding from a surface of the license plates (P1, P2) is covered by a cap made of synthetic resin material or non-iron material to thereby conceal corrosion of the bolt. However, in a case where a bolt head or seal is finished again with the cap while protruding from the license plates (P1, P2) by about 10 mm, a problem arises that protrusion of the bolt or seal is increased and thus the outer appearance is deteriorated. Particularly, in a case where another vehicle collides with the bolt or seal in a protruding state, a problem arises that damage is caused to a contact portion of the another vehicle, which may cause compensation or quarrel.

Meanwhile, for a car among the existing vehicles, if a tail light works at night, a light bulb is lighted simultaneously which is installed for identification of the number on the vehicle license plate, a structure of which is as follows: the light bulb is installed in a shaped portion recessed inwardly from a door of vehicle trunk.

In particular, the existing vehicle is designed such that the shaped portion inwardly recessed is provided in the rear of the trunk and a socket for installation of the light bulb is installed on an upper end of the recessed portion and a small light bulb is fitted in the socket and a light from the small light bulb is shed on the license plate below the light bulb, whereby the license plate can be identified at a dark place.

In order words, the existing vehicle has a structure where a lighting device for identification of the license plate is installed at a separate position spaced apart from the license plate to indirectly light the license plate.

Therefore, since such an existing lighting structure for the identification of the license plate adopts a way of indirectly lighting the license plate, the license plate is not sufficiently brightly lighted due to a structural limit of the lighting way, and thus ability to identify the vehicle number in the license plate is reduced, which will eventually affect a safety drive.

Furthermore, there is a disadvantage that since a general small light bulb is formerly adopted for lighting, a service life of the light bulb is short and electrical consumption is large and a lot of heat is generated, which is not environment-friendly.

In addition, the existing lighting structure for the rear license plate of vehicle imposes a limitation on diversification of vehicle design as a position for the installation of the light bulb for indirect lighting has to be separately prepared on the vehicle trunk and the like.

Therefore, there is a need to solve the structural problem of the existing indirect lighting way for vehicle license plate, and a structure needs to be provided which can ensure a diversity of design by eliminating the limitation imposed on the design of the vehicle trunk.

Meanwhile, an effective structure for mounting the license plate needs to be provided which, while eliminating the structural problem of the existing indirect lighting way, can simultaneously solve the problem due to protrusion of the bolt or seal for fixing the vehicle license plate.

### SUMMARY OF THE INVENTION

### Technical problems

The present invention was made in order to solve the above-mentioned problems, and its object is to provide a multifunctional plate for protecting a vehicle license plate which can minimize deterioration of outer appearance due to protrusion of a bolt or seal out of the license plate and damage on contacting with another vehicle by providing a structure for effectively protecting and supporting the license plate having unique number of the vehicle and also provides a lighting structure for lighting the license plate so that identification of the vehicle number can be allowed in a dark condition such as at night.

Namely, the present invention has an object of providing a license plate lighting structure of high efficiency applying green technology by using LEDs of high energy efficiency to light the license plate and also minimizing the deterioration of outer appearance due to protrusion of a bolt or seal out of the license plate and damage to a counterpart vehicle on contacting with another vehicle by providing a structure for effectively protecting and supporting the license plate having the unique number of the vehicle.

Meanwhile, the present invention has another object of providing a multifunctional plate for protecting a vehicle license plate which can solve the structural problem of the existing indirect lighting way for vehicle license plate and at the same tine ensure a diversity of the vehicle design by eliminating a limitation imposed on the design of the vehicle trunk.

### Solution to the problem

For achieving the above objects, the present invention provides a multifunctional plate for protecting a vehicle license plate which has a protection frame that protrudes from an edge of the multifunctional plate to a suitable height so that the license plate, which is mounted on a front bumper or the rear of the vehicle and has unique information of the vehicle, can be rested on the multifunctional plate, wherein a protection cover is coupled to the multifunctional plate so as to prevent a head portion of a license plate-fastening bolt or seal, which protrudes from a surface of the license plate when the license plate rested on the multifunctional plate is fixed to a vehicle body, from contacting with another vehicle, and wherein the multifunctional plate or the protection cover is provided with lighting means (L) for identifying a vehicle number through direct lighting on the license plate when lighted.

At this time, the lighting means is provided inside the protection cover.

Meanwhile, the lighting means may be provided inside upper border of the multifunctional plate.

Furthermore, the lighting means is LED (Light Emitting Diode) module(hereinafter, "LED module").

Furthermore, a grip groove serving as a handle is formed on a lower border of the multifunctional plate.

Furthermore, a light-reflecting member such as light-reflecting sheet is provided on the surface of the protection cover exposed to the outside.

Meanwhile, formed in the protection cover is a through-hole through which the bolt or seal passes, and a cap is provided around the through-hole for covering the through-hole so that the head portion of the bolt or seal positioned in the through-hole is not exposed to the outside.

### Effects of the invention

The multifunctional plate having vehicle license plate lighting structure of the present invention has the following advantages.

First, according to the present invention, a structure is provided which can effectively protect and support the license plate having unique number of the vehicle.

Namely, according to the plate for vehicle license plate of the present invention, by virtue of the fact that the bolt is concealed by the protection cover and the seal is enclosed by the protection cover when the license plate is rested and fixed, an impact is first buffered by the protection cover prior to contact of the bolt or seal of the license plate in a case where an accident occurs in which the vehicle contacts with external vehicle or external structure, whereby a damage to the counterpart vehicle can be minimized, in addition, the bolt or seal protruding out of the license plate is concealed by the protection plate, whereby aesthetic decrease in outer appearance is prevented, and various aesthetic feels may be represented in a case where the protection cover is produced in various colors.

Second, according to the present invention, in providing of the lighting structure that lights the license plate so that the vehicle number can be identified in a dark condition such as at night, ability to identify the vehicle number can be enhanced due to direct lighting inside the license plate, rather than indirect lighting at a separate position spaced apart from the license plate, which can help a safe driving.

Third, according to the present invention, the LED module with a high light efficiency adopted for a lighting lamp has less consumption of power, a long service life and longer period of replacement compared to the existing light source, thereby allowing save of maintenance cost, and thus is economical, and also emits less heat and no harmful material, therefore, is environment-friendly.

Fourth, according to the present invention, the lighting structure for lighting the license plate does not have to be placed on the trunk or another portion of the vehicle body, which is helpful for ensuring the diversity of design of the vehicle body.

In other words, unlike the existing lighting structure for a rear license plate of vehicle, a direct lighting in inner area of the license plate is provided, and thus a place for installing a light bulb for indirect lighting does not have to be separately prepared on the vehicle trunk and the like, which is helpful for diversification of design of the vehicle body including the trunk.

Fifth, according to the present invention, the lighting structure can be also provided on the front license plate of the vehicle, and thus ability to indentifying the vehicle license plate can be enhanced, which is further helpful for the safe driving.

In other words, previously, any lighting device cannot be provided for the front license plate of the vehicle, unlike the rear license plate, but the present invention allows the front license plate of the vehicle to be also identified through the lighting, which is distinguished from the existing art and is much helpful for the safe driving.

Sixth, according to the present invention, in a case where company logo or company name is silkprinted on the protection cover and a surface of the protection cover may have various colors such as blue, red, white etc., most of the light emitted from the LED module travels directly to the license plate; however, pale light indirectly spreading over the plate delicately lights the logo or company name silkprinted on the protection cover, whereby an advertizing effect may be provided.

### BRIEF DESCRIPTION OF THE DRAWINGS

Figs. 1 and 2 are perspective views illustrating an existing license plate and new license plate, respectively;
Fig.3 is an exploded perspective view illustrating an applied state of a multifunctional plate for vehicle license plate according to a first embodiment of the present invention;
Fig.4 is a perspective view showing an assembled state of Fig.3;
Fig.5 is an exploded perspective view illustrating an applied state of a multifunctional plate for vehicle license plate according to a second embodiment of the present invention;
Fig.6 is a perspective view showing an assembled state of Fig.5;
Fig. 7 is a perspective view of Fig.6 from a different angle;
Fig.8 is a perspective view illustrating a multifunctional plate for vehicle license plate according to a third embodiment of the present invention;
Fig.9 is a perspective view showing an assembled state of Fig.8; and
Fig.10 is a rear perspective view of Fig.9.

### BEST MODES FOR CARRYING OUT THE INVENTION

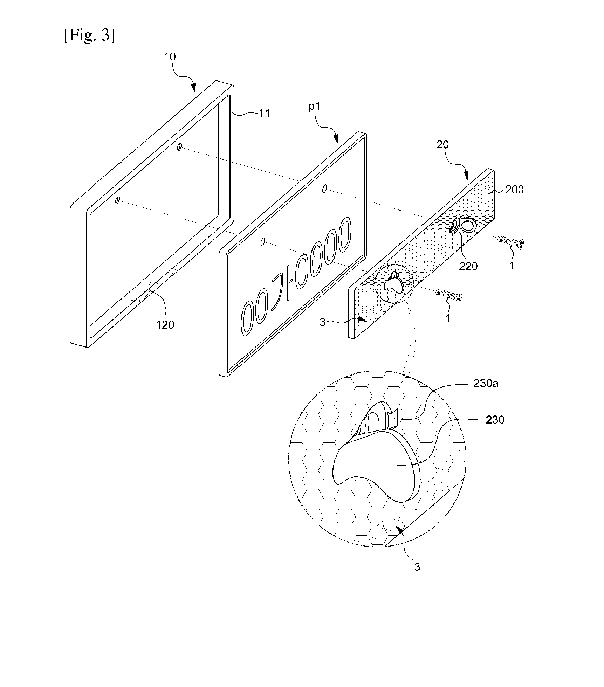

Hereinafter, embodiments of the present invention will be described in detail with reference to Figs. 3 to 10 of the attached drawings as follows.

Each of the embodiments of the present invention an application example of the present invention according to a form and size of the vehicle license plate, and it is taken as a prerequisite that technical concepts applied to the respective embodiments are the same. It should be noted prior to description of each embodiment of the present invention that there may be a case where a seal of the vehicle license plate may not be present according to the system and rules of each country, and thus a bolt will be described instead of the seal in the following embodiments.

Therefore, it is taken as a prerequisite that one of both bolts illustrated in the following embodiments may be replaced with the seal in a case of application of the present invention to the vehicle license plates (P1, P2) and that one of both bolts may be also replaced with the seal particularly in a case of embodiment 3. Thus, the scope of claims of the present invention should not be defined only by the following embodiments, rather should be defined by the claims described later and equivalents thereto.

### [Embodiment 1]

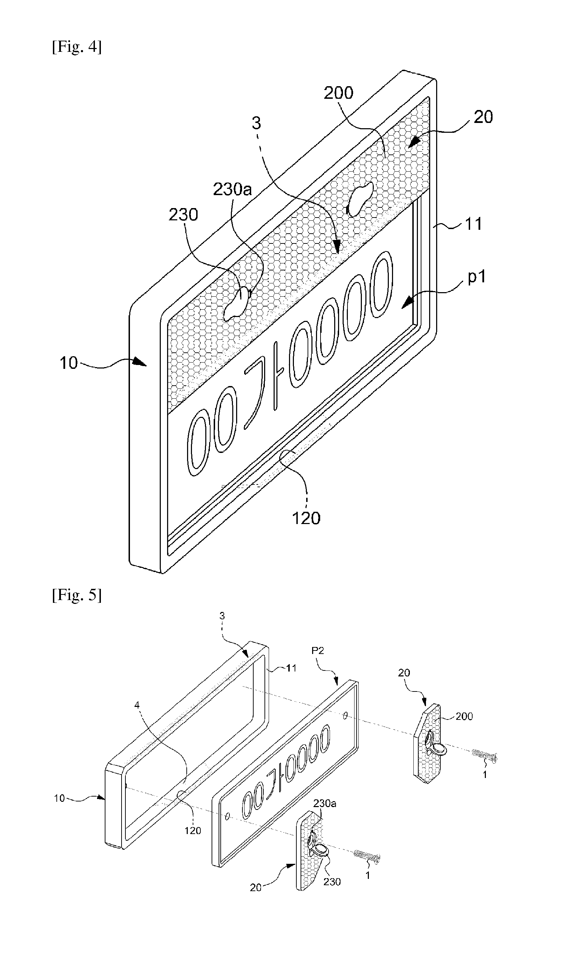

Fig.3 is an exploded perspective view illustrating a multifunctional plate for vehicle license plate according to a first embodiment of the present invention, and Fig.4 is a perspective view showing an assembled state of Fig.3.

Referring to Figs.3 and 4, there is shown a plate (10) for protecting a vehicle license plate according to the first embodiment of the present invention; a case is shown where the present invention is applied to a license plate (corresponding to P1 of Fig.1) in which a bolt or seal is positioned above an area of vehicle number.

Referring to these figures, according to the first embodiment, in the plate (10) for protecting a vehicle license plate which has a protection frame (11) that protrudes from an edge of the plate to a suitable height so that the license plate (P1), which is mounted on a front bumper or a rear trunk(not illustrated) of a vehicle and has unique information of the vehicle, can be rested on the plate (10), a protection cover (20) is coupled to the plate (10) so as to prevent a head portion of a license plate-fastening bolt (1), which protrudes from a surface of the license plate (P1) when the license plate (P1) rested on the plate (10) is fixed to a vehicle body, from contacting with another vehicle.

Also, the protection cover (20) is provided with lighting means (L) for identifying the vehicle number through direct lighting on the license plate (P1) when lighted.

The protection cover (20) is made of, for example, light-transmissive resin material such as polycarbonate.

At this time, the lighting means (L) is provided inside the protection cover (20).

Furthermore, it is preferable that LED module (3) with a good light efficiency is used as the lighting means (L).

In a case where the LED module (3) is housed in the protection cover (20), the module takes the form of a straight band along inner profile of a border of the protection cover (20). At this time, the surface of the protection cover (20) wrapping the LED module (3), of course, is made of light-transmissive transparent material.

Furthermore, the LED module (3) is sealed so as to be water and vibration proof.

Meanwhile, provided on a surface of the protection cover (20) is a light-reflecting member (200) such as light-reflecting sheet for example.

Also, formed in the protection cover (20) is through-hole (220) through which the bolt (1) passes, and a cap (230) is provided around the through-hole (220) for covering the through-hole (220) so that the head portion of the bolt (1) positioned in the through-hole is not exposed to the outside.

At this time, a pattern (for example, geometrical pattern, company logo) may be drawn on the cap (230) for a fine view, and an opening direction of the cap (230) is not limited to the direction illustrated and may be various directions.

Furthermore, it is preferable that a groove (230a) for facilitating operation of opening the cap (230) is formed on the protection cover (20) around the cap (230).

Meanwhile, a grip groove (120) serving as a handle may be formed on a lower border of the plate (10). The grip groove (120) is formed by for example cutting out a portion of the lower border; in such a case where the grip groove (120) serving as a handle is formed on the plate itself, a separate handle does not have to be formed on the trunk.

Operation of the multifunctional plate for protecting a vehicle license plate of the first embodiment configured as above will be described as follows.

First, in a case where an accident occurs in which the vehicle contacts with external vehicle or external structure, an impact is first buffered by the protection cover (20) prior to contact of the bolt of the license plate (P1), whereby a damage to the counterpart vehicle can be minimized. In addition, the bolt (1) protruding out of the license plate (P1) is concealed by the protection plate (P1), whereby aesthetic decrease in outer appearance is prevented, and various aesthetic feels may be represented in a case where the protection cover (20) is produced in various colors.

Next, the multifunctional plate for protecting a vehicle license plate of the first embodiment contributes to simultaneous ensuring of diversity of the vehicle design by solving the structural problem of the existing indirect lighting way for vehicle license plate (P1) and also eliminating the limitation imposed on the design of the vehicle trunk.

According to the first embodiment, in providing of the lighting structure that lights the license plate (P1) so that the vehicle number can be identified in a dark condition such as at night, ability to identify the vehicle number can be enhanced due to direct lighting inside the license plate, rather than indirect lighting at a separate position spaced apart from the license plate (P1).

Namely, since the LED module including several bright LEDs evenly clearly and brightly sheds light downward from a groove of the plate (10) directly above the license plate, information indicated in the license plate (P1) can be easily recognized and identified even at a place long distanced from the vehicle, which can help a safe driving.

Furthermore, according to the first embodiment, the LED module with a high light efficiency adopted for a lighting lamp has less consumption of power, a long service life and longer period of replacement compared to the existing light source, thereby allowing save of maintenance cost, and thus is economical, and also emits less heat and no harmful material, therefore, is environment-friendly.

In addition, since the light-reflecting member (200) such as light-reflecting sheet is provided on the surface of the protection cover (20) exposed to the outside, the ability to identify the vehicle is further increased, thereby giving a great aid to the safe driving, when a light of rear vehicle lights the light-reflecting member at night.

Furthermore, provided on the protection cover (20) around the through-hole (220) through which the bolt (1) passes is the cap (230) for covering the through-hole (220) so that the head portion of the bolt (1) positioned in the through-hole is not exposed to the outside, therefore, the bolt or seal is prevented from being exposed to the outside, whereby attachment of rust or foreign material is prevented and also aesthetic feel is enhanced.

### [Embodiment 2]

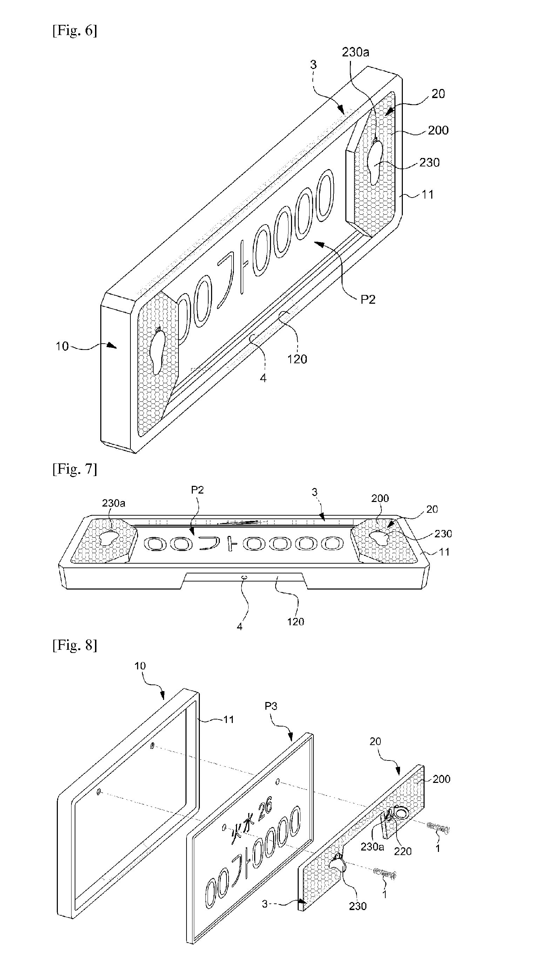

Fig.5 is an exploded perspective view illustrating a multifunctional plate for vehicle license plate according to a second embodiment of the present invention, Fig.6 is a perspective view showing an assembled state of Fig.5, and Fig. 7 is a perspective view of Fig.6 from a different angle.

Referring to Figs. 5 to 7, there is shown a plate (10) for protecting a vehicle license plate according to the second embodiment of the present invention; a case is shown where the present invention is applied to a license plate (P2) in which bolts or seals are positioned on left and right sides of an area of vehicle number.

Referring to these figures, a basic structure of the plate (10) for protecting a vehicle license plate of the second embodiment is the same as that of the embodiment 1 described above.

Namely, a protection frame (11) is provided which protrudes from an edge of the plate to a suitable height so that the license plate (P2), which is mounted on a front bumper or a rear trunk of a vehicle and has unique information of the vehicle, can be rested inside the plate (10).

Also, the protection cover (20) is coupled to the plate (10) so as to prevent a head portion of a license plate-fastening bolt (1) or seal (2), which protrudes from a surface of the license plate (P2) when the license plate (P2) is fixed to the vehicle body, from contacting with another vehicle.

Furthermore, also in the second embodiment, lighting means (L) is provided for identifying the vehicle number through direct lighting on the license plate (P2).

However, in the second embodiment, as the seals and bolts are positioned at left and right end portions of the license plate (P2), left and right protection covers (20) are separately provided.

Therefore, the plate for protecting a vehicle license plate of the second embodiment has only structural difference in that unlike the above-described embodiment 1, the lighting means (L) for lighting the vehicle license plate (P2) is provided on inner side of upper border of the plate (10).

Namely, the LED module (3) as the lighting means (L) is housed in a mounting groove on the inner side of the upper border of the plate (10), and at this time, a window made of light-transmissive transparent material, of course, is formed on the outside of the LED module (3).

Furthermore, the LED module (3) may be attached to the mounting groove on the inner side of the upper border of the plate (10) by means of adhesive tape (not shown) or the LED module (3) may be fitted in the mounting groove without using the adhesive tape and remain fixed by a screw (not shown) fastened from behind the plate (10).

In the case of such screw coupling, if the screw is released in the rear, the LED module (3) can be easily separated from the plate (10) and thus the LED module can be easily replaced.

Meanwhile, a grip groove (120) serving as a handle may be formed on a lower border of the plate (10). The grip groove (120) is formed by for example cutting out a portion of the lower border; in the case where the grip groove (120) serving as a handle is formed on the plate itself like this, a separate handle does not have to be formed on the trunk.

In addition, according to the plate (10) for protecting a license plate of the second embodiment, a rear camera (4) is installed in a certain portion of the grip groove (120) so as to enable a driver to view the rear of the vehicle.

Operations on the plate (P2) of the plate for protecting a license plate of the second embodiment configured as above, namely operations of protecting, supporting and lighting the license plate are substantially the same as or similar to those of the embodiment 1 described above, with only difference in lighting position of the light source according to installation position of the LED module (3), and therefore, detailed description of the same parts will be omitted.

However, since the rear camera (4) is installed in the certain portion of the grip groove (120) so as to enable the driver to view the rear of the vehicle, the plate (10) for protecting a license plate of the second embodiment has the following advantage. Namely, according to the second embodiment, since the rear camera does not have to be mounted on the vehicle body, a damage to the vehicle body due to the mounting of the rear camera can be prevented and the appearance can be neatly maintained.

Such a structure for installing the rear camera (4) in the grip groove (120) according to the second embodiment is applicable to the embodiment 1 described above, and of course is also applicable to embodiment 3 described later.

Meanwhile, an installation structure for the lighting means (L) according to the present embodiment is also applicable to the embodiment 1 described above, and of course is also applicable to embodiment 3 described later.

Namely, in a case where the technical configuration of the second embodiment is applied to the embodiment 1 or embodiment 3, the LED module (3) is installed in the inner side of the upper border of the plate (10) instead of the protection cover (20), which is beneficial to wiring. Instead, a LED module capable of more brightly lighting the license plate is installed considering a distance from the number on the license plate.

### [Embodiment 3]

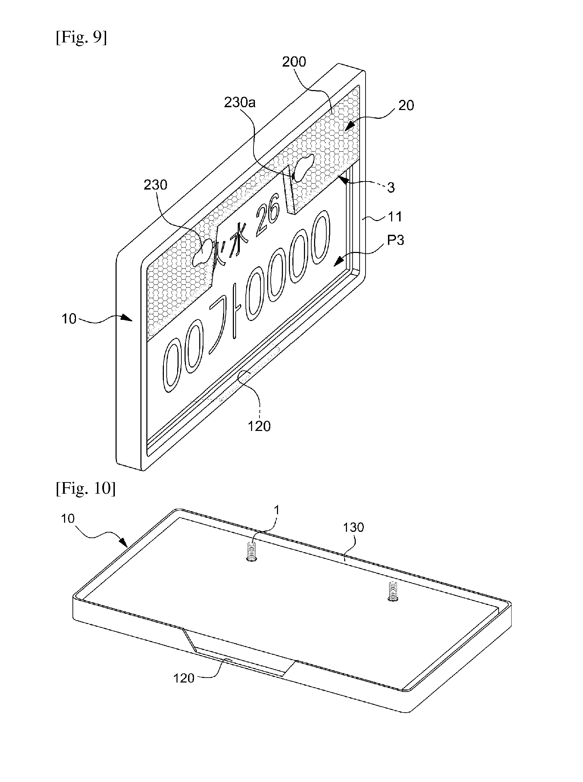

Fig.8 is a perspective view illustrating a multifunctional plate for vehicle license plate according to a third embodiment of the present invention, Fig.9 is a perspective view showing an assembled state of Fig.8, and Fig. 10 is a rear perspective view of Fig.9.

Referring to Figs. 8 to 10, there is shown a plate (10) for protecting a vehicle license plate according to a third embodiment of the present invention; a case is shown where the present invention is applied to a license plate of a type (for example, vehicle license plates used in Japan) where, while the bolts or seals are present above the area of the vehicle number, another vehicle number is also present in an area between the bolts or seals.

Referring to these figures, the plate (10) for protecting a vehicle license plate according to the third embodiment is the same as the above-described embodiment 1 in basic structure.

Namely, a protection frame (11) is provided which protrudes from an edge of the plate (10) to a suitable height so that a license plate (P3), which is mounted on the front bumper or rear trunk of the vehicle and has unique information of the vehicle, can be rested inside the plate (10).

Furthermore, the protection cover (20) is coupled to the plate (10) so as to prevent a head portion of a license plate-fastening bolt (1) or seal (2), which protrudes from a surface of the license plate (P3) when the license plate (P3) is fixed to the vehicle body, from contacting with another vehicle.

In addition, the protection cover (20) is provided with the lighting means (L) for identifying the vehicle number through direct lighting on the license plate (P3) when lighted.

However, the license plate of the third embodiment has a difference in that while the bolts or seals are present above the area of the vehicle number as in the above-described embodiment 1, another vehicle number is also present in the area between the bolts or seals.

Therefore, according to technical consideration of it, in the plate for protecting a license plate of the third embodiment, the lighting means (L) is provided in the protection cover (20) as in the above-described embodiment 1, however, unlike the embodiment 1, the protection cover (20) has a recessed portion considering the vehicle number present in the area between the bolts or seals, and the LED module (3) constituting the lighting means (L) is installed in a form following a profile of the inner recessed portion of a border of the protection cover (20).

Namely, the LED module (3) is installed in a form following a profile (i.e., form) of the border of the protection cover (20).

Meanwhile, referring to Fig. 9, the grip groove (120) serving as a handle may be formed on a lower border of the plate (10). The grip groove (120) is formed by for example cutting out a portion of the lower border; in such a case where the grip groove (120) serving as a handle is formed on the plate itself, a separate handle does not have to be formed on the trunk.

In addition, the grip groove (120) of the third embodiment, of course, is commonly applicable to the embodiment 1 and embodiment 2 described above.

Meanwhile, a pad groove (130) may be provided for installing a buffering pad (not shown) which has a cushion along a rear edge of the plate (10) and thus first absorbs an impact prior to application of the impact to the license plate (P3) upon occurrence of accident in which the vehicle contacts with another vehicle or external structure. Such pad groove (130) and buffering pad (not shown), of course, are commonly applicable to the embodiment 1 and embodiment 2 described above.

Operations of the plate for protecting a license plate of the third embodiment configured as above, namely operations of protecting, supporting and lighting the license plate are substantially the same as or similar to those of the embodiment 1 and embodiment 2 described above, and therefore, detailed description of it will be omitted to avoid the repetition of description.

Meanwhile, the present invention is not limited to the above-described embodiments, and various alterations and modifications, of course, may be made without departing from the scope of technical concepts of the present invention.

For example, in the above-described embodiments, the LED module (3) using light-emitting diodes is used as the lighting means (L), but the lighting means (L) is not limited to the LED module. Namely, OLED (Organic Light-Emitting Diode) actively commercialized recently may be also used as the lighting means.

Furthermore, in the embodiment 1 and embodiment 3 described above, the lighting means (L) is housed in the protection cover (20), but unlike this, it is of course that the lighting means may be provided on the upper border of the plate (10) and the protection cover (20) may be made of light-transmissive material allowing light from the LED module (3) to pass through the protection cover, as in the embodiment 2 described above.

In addition, in a case where company logo or company name is silkprinted on the protection cover and a surface of the protection cover may have various colors such as blue, red, white etc., most of the light emitted from the LED module travels directly to the license plate; however, pale light indirectly spreading over the plate delicately lights the logo or company name silkprinted on the protection cover, whereby an advertizing effect may be provided.

Meanwhile, although the above-described embodiments take a car or van as motor vehicle on which the license plate is installed, the motor vehicle is not limited to it. Namely, in the present invention, the motor vehicle is one using a driving power provided from a prime mover such as steam engine, electric motor, gas turbine etc. in addition to gasoline and diesel internal combustion engines. All of two-wheeled, three-wheeled, four-wheeled or more vehicles are included as long as they have the license plate. In other words, the car, van, truck, special vehicle and two-wheeled vehicle etc. are all included.

Therefore, the above-described embodiments should be considered to be illustrative, rather than restrictive. Therefore, the present invention is not limited to the above description, and it is obvious to those skilled in the art that modifications may be made within the scope of appended claims and equivalents thereto.

### Industrial applicability

The present invention has a very high industrial applicability in that it can provide a structure for protecting and supporting a license plate having unique number of the vehicle and also provide a lighting structure for directly lighting the license plate so that identification of the vehicle number can be allowed in a dark condition such as at night, and further eliminate the limitation imposed on the design of the vehicle trunk to thereby be helpful for ensuring the diversity of the design of the vehicle.

## Claims

1. A multifunctional plate for protecting a vehicle license plate which has a protection frame that protrudes from an edge of the multifunctional plate to a suitable height so that the license plate, which is mounted on a front bumper or the rear of the vehicle and has unique information of the vehicle, can be rested on the multifunctional plate,
wherein a protection cover is coupled to the multifunctional plate so as to prevent a head portion of a license plate-fastening bolt or seal, which protrudes from a surface of the license plate when the license plate rested on the multifunctional plate is fixed to a vehicle body, from contacting with another vehicle, and
wherein the multifunctional plate or the protection cover is provided with lighting means for identifying a vehicle number through direct lighting on the license plate when lighted.

2. The multifunctional plate for protecting a vehicle license plate according to claim 1, wherein the lighting means is housed in the protection cover.

3. The multifunctional plate for protecting a vehicle license plate according to claim 1, wherein the lighting means is housed in upper border of the multifunctional plate.

4. The multifunctional plate for protecting a vehicle license plate according to claim 2 or 3, wherein the lighting means is LED(Light Emitting Diode) module.

5. The multifunctional plate for protecting a vehicle license plate according to claim 1, wherein a surface of the protection cover is provided with a light-reflecting member.

6. The multifunctional plate for protecting a vehicle license plate according to claim 1, wherein formed in the protection cover is a through-hole through which the bolt or seal passes, and a cap is provided around the through-hole for covering the through-hole so that the head portion of the bolt or seal positioned in the through-hole is not exposed to the outside.

7. The multifunctional plate for protecting a vehicle license plate according to claim 1, wherein a grip groove serving as a handle is formed on a lower border of the multifunctional plate.

8. The multifunctional plate for protecting a vehicle license plate according to claim 7, wherein a rear camera is installed in the grip groove so as to enable viewing of the rear of the vehicle.
